(19) Europäisches Patentamt
European Patent Office
Office européen des brevets

(11) EP 2 314 648 B1

(12) **EUROPEAN PATENT SPECIFICATION**

(45) Date of publication and mention of the grant of the patent:
**31.07.2013 Bulletin 2013/31**

(21) Application number: **09806754.9**

(22) Date of filing: **14.08.2009**

(51) Int Cl.:
***C09D 5/02*** (2006.01) ***C09D 11/14*** (2006.01)
***C09D 123/26*** (2006.01) ***C09J 123/26*** (2006.01)
***C09D 7/12*** (2006.01) ***C09D 11/00*** (2006.01)
*C09D 171/02* (2006.01)

(86) International application number:
**PCT/JP2009/064336**

(87) International publication number:
**WO 2010/018863 (18.02.2010 Gazette 2010/07)**

(54) **DISPERSION RESIN COMPOSITION, AND PAINT COMPOSITION, INK COMPOSITION, ADHESIVE COMPOSITION, AND PRIMER COMPOSITION CONTAINING SAME**

DISPERSIONHARZZUSAMMENSETZUNG SOWIE FARBZUSAMMENSETZUNG, TINTENZUSAMMENSETZUNG, HAFTZUSAMMENSETZUNG UND PRIMERZUSAMMENSETZUNG DAMIT

COMPOSITION DE RÉSINE DISPERSANTE, ET COMPOSITION DE PEINTURE, COMPOSITION D'ENCRE, COMPOSITION ADHÉSIVE ET COMPOSITION D'AMORCE LA CONTENANT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.08.2008 JP 2008209027**

(43) Date of publication of application:
**27.04.2011 Bulletin 2011/17**

(73) Proprietor: **Nippon Paper Chemicals Co., Ltd.**
**Tokyo 100-0003 (JP)**

(72) Inventors:
- **NAGAOKA, Naoko**
  **Iwakuni-shi**
  **Yamaguchi 740-0003 (JP)**
- **OKAYAMA, Kenshou**
  **Iwakuni-shi**
  **Yamaguchi 740-0003 (JP)**
- **TANAKA, Masanori**
  **Iwakuni-shi**
  **Yamaguchi 740-0003 (JP)**
- **KOMOTO, Naosuke**
  **Iwakuni-shi**
  **Yamaguchi 740-0003 (JP)**

(74) Representative: **Müller-Boré & Partner Patentanwälte**
**Grafinger Straße 2**
**81671 München (DE)**

(56) References cited:
**WO-A1-2007/119760** **WO-A1-2008/072689**
**JP-A- 6 256 592** **JP-A- 6 256 592**
**JP-A- 7 109 359** **JP-A- 2003 342 335**
**JP-A- 2004 091 559** **JP-A- 2005 163 030**
**JP-A- 2008 214 414**

- **'Alkylene Oxide Fukabutsu Ethomeen, Ethomid, Ethofat, Ethoduomeen, Ethopropomeen', [Online] 15 July 2000, XP008141426 Retrieved from the Internet: <URL:http://www.lion.co.jp/ laco/j/ prod/c/ethomeen.pdf> [retrieved on 2009-10-27]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 314 648 B1

## Description

The present invention relates to a dispersion resin composition for use in a paint, an ink, an adhesive or a primer that each contains an alcohol and/or an ether, which exhibits excellent dispersibility in water, and relates to a dispersion resin composition that exhibits favorable water dispersibility and can maintain excellent dispersion stability even when containing organic solvents such as an alcohol or an ether, and relates to a composition of a paint, an ink, an adhesive and a primer each of which contains the dispersion resin composition.

Chlorinated modified polyolefin resins or propylene-based polymers modified by using an acid such as an unsaturated carboxylic acid and the anhydride thereof have been used as a binder for paint or ink, an adhesive, or a primer, which have excellent adhesive property to poorly adhesive polyolefin substrates such as polypropylene and polyethylene substrates.

In recent years, solvent-based paint is shifting to water-based paint in the field of paint, and solvent-based ink is shifting to water-based ink in the field of ink, in view of an environmental issue such as for reduction of volatile organic compounds (VOCs). Under such circumstances, the chlorinated modified polyolefin resins and propylene-based polymers modified by using an acid such as an unsaturated carboxylic acid or the anhydrides thereof are required to be aqueous polymers (to improve their water dispersibility).

Water has higher latent heat of vaporization, a lower relative evaporation rate, and higher surface tension as compared with common organic solvents used for paint and ink. Accordingly, since water-based paint and water-based ink evaporate slowly, viscosity increasing becomes small after coating water-based paint or after printing water-based ink and this easily causes a problem such as paint dripping or ink dripping. Moreover, high surface tension causes a problem arising from wettability, when water-based paint is applied on or when water-based ink is printed to such substrates having low surface tension. Furthermore, since the water-based paint or water-based ink is different from solvent-based paint and solvent-based ink in that the water-based components are in a state of dispersed particles, if the dispersed particles do not sufficiently bind during film formation, the physical properties of water-based paint or water-based ink are adversely affected in various ways.

In order to solve these problems, the method of adding an organic solvent to water-based paint or water-based ink is known. As for such the organic solvent, low boiling point (less than about 120°C) of organic solvents, or medium to high boiling point (about 120°C to about 320°C) of hydrophilic or hydrophobic organic solvents have been used. The organic solvent having a low boiling point has been used as a drying promoter to be added for water-based paint or water-based ink.

However, adding an organic solvent to water-based paint or water-based ink may deteriorate dispersion stability.

JP No. H11-152409 A (Patent document 1) and WO2006/106813 (Patent document 2) disclose emulsions having organic solvent resistance. Patent document 1 discloses a technique for preparing an emulsion or a microemulsion stable in the presence of an alcohol. Patent document 2 discloses a technique for preparing an emulsion that contains an alcohol and an emulsifier and has alcohol resistance. However, when an emulsion is prepared by employing the above any techniques in which the emulsion is produced to contain a polyolefin-based resin containing a polymer mainly composed of olefin monomer units such as a modified polyolefin resin including a chlorinated modified polyolefin resin, the organic solvent resistance of the emulsion is insufficient.

WO 2007/119760 A1 describes an aqueous primer composition. JP6 - 256592 A describes an aqueous polyolefin resin.

Patent document 1: JP No. H11-152409 A
Patent document 2: WO2006/106813

It is an object of the present invention to provide a dispersion resin composition for use in a paint, an ink, an adhesive or a primer containing an alcohol and/or an ether, which exhibits excellent dispersibility in water. And also, it is an object: to provide a dispersion resin composition having favorable water dispersibility and maintaining excellent dispersion stability even when the dispersion resin composition is added to a material containing organic solvents such as an alcohol and/or an ether or when an organic solvent is added to the dispersion resin composition; and to provide a composition of a paint, an ink, an adhesive and a primer each of which contains the dispersion resin composition.

As a result of intensive studies for solving the above problems, the inventors of the present invention have found a dispersion resin composition, which is obtained by adding a nitrogen-containing polyoxyalkylene derivative when a polyolefin resin is dispersed in water, and which has favorable water dispersibility and can maintain excellent dispersion stability even when the dispersion resin composition is added to a paint, an ink, an adhesive, a primer or a material containing an alcohol and/or an ether, and completed the present invention.

Present invention provides following [1] to [6].

[1] A dispersion resin composition for use in a paint, an ink, an adhesive or a primer containing an alcohol and/or an ether, the dispersion resin composition comprising:

(a) a modified polyolefin resin which is obtained by modifying a polyolefin-based resin containing a polymer mainly composed of olefin monomer units by using one or more types of polarity-imparting agents selected from the group consisting of chlorine, an unsaturated carboxylic acid, a derivative of the unsaturated carboxylic acid, an anhydride of the unsaturated carboxylic acid, and a radical polymerizable monomer;

(b) a nitrogen-containing polyoxyalkylene derivative having a HLB value of 5 to 17, the HLB value representing a balance of hydrophilicity-lipophilicity and being calculated by the Griffin's formula HLB=[{(molecular weight of hydrophilic group moiety)/(total molecular weight)}×100]/5;

(c) a basic substance; and

(d) water.

[2] The dispersion resin composition according to [1], wherein the (b) nitrogen-containing polyoxyalkylene derivative comprises one or more types of compounds selected from the group consisting of a compound of Formula (I) below, a compound of Formula (II) below, and a compound of Formula (III) below:

[Chem. 1]

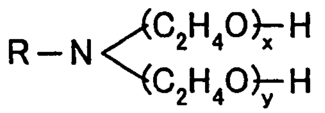 ···(I)

(in Formula (I), R represents an alkyl group having 1 to 50 carbon atoms, x represents an integer of 1 to 49, y represents an integer of 1 to 49, and x+y represents an integer of 2 to 50),

[Chem. 2]

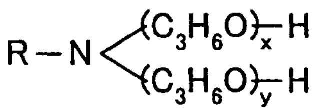 ···(II)

(in Formula (II), R represents an alkyl group having 1 to 50 carbon atoms, x represents an integer of 1 to 49, y represents an integer of 1 to 49, and x+y represents an integer of 2 to 50),

[Chem. 3]

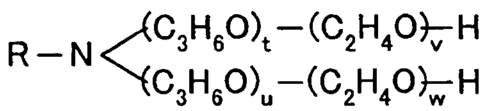 ···(III)

(in Formula (III), R represents an alkyl group having 1 to 50 carbon atoms, t represents an integer of 1 to 47, u represents an integer of 1 to 47, v represents an integer of 1 to 47, w represents an integer of 1 to 47, t+v represents an integer of 2 to 48, u+w represents an integer of 2 to 48, and t+u+v+w represents an integer of 4 to 50).

[3] The dispersion resin composition according to [1] or [2], wherein the (a) modified polyolefin resin is a modified polyolefin resin which is obtained by modifying a polyolefin-based resin containing a polymer mainly composed of olefin monomer units by using chlorine and an unsaturated carboxylic acid and/or an anhydride of the unsaturated carboxylic acid.

[4] The dispersion resin composition according to any one of [1] to [3], further comprising (e) an alcohol and/or an ether.

[5] A composition of a paint, an ink, an adhesive, or a primer comprising:

the dispersion resin composition according to any one of [1] to [4]; and
any an alcohol and/or an ether.

[6] A composition of a paint or an ink comprising:

the dispersion resin composition according to any one of [1] to [4];
any an alcohol and/or an ether;
a component (f) that is one or more resins selected from the group consisting of an acrylic resin, a polyurethane resin, a polyester resin, a polyvinyl acetate resin, a modified polyolefin resin, a chrolinated polyolefin resin, an epoxy resin, a polyether resin, a polycarbonate resin and an alkyd resin; and
a component (g) of pigment.

The dispersion resin composition of the present invention is a resin composition for a paint, an ink, an adhesive or a primer that each contains an alcohol and/or an ether, which exhibits excellent water dispersibility and does not lead increasing viscosity to become a gel and can maintain excellent dispersion stability with the time passage even when the dispersion resin composition contains an alcohol and/or an ether. The polyolefin resin dispersion composition of the present invention can form a coating to a non-polar substrate made of polyolefin and the like, which is excellent in physical properties such as adhesion, water resistance and gasohol resistance even when the polyolefin resin dispersion composition is used alone, or even when it contains an alcohol and/or an ether, or even when it is added to a paint, an ink, an adhesive or a primer containing an alcohol and/or an ether. Accordingly, the dispersion resin composition of the present invention is suitable for use as a paint, an ink, an adhesive or a primer that each contains an alcohol and/or an ether.

The present invention is described in detail below.

The dispersion resin composition of the present invention contains (a) modified a polyolefin-based resin containing a polymer mainly composed of olefin monomer units, (b) a nitrogen-containing polyoxyalkylene derivative, (c) a basic substance, and (d) water. Even when the dispersion resin composition of the present invention is used for a paint, an ink, an adhesive or a primer that each contains an alcohol and/or an ether, or even when the dispersion resin composition contains an alcohol and/or an ether, the dispersion resin composition maintain a stable dispersed state that leads excellent water dispersibility and that keeps excellent dispersion stability. The water dispersibility means that polymers (resin) are uniformly dispersed in water to form an emulsion. The dispersion stability means that the water dispersibility is maintained for a long time after the preparation of the dispersion resin composition.

The (a) modified polyolefin-based resin containing a polymer mainly composed of olefin monomer units is used as the first component of the dispersion resin composition.

Examples of the polymer mainly composed of olefin monomer units include a homopolymer obtained from ethylene or α-olefin and a copolymer obtained from a combination of two or more selected from ethylene and α-olefins. The homopolymer and the copolymer may be produced by homopolymerizing one monomer selected from the monomer group consisting of ethylene and α-olefins or copolymerizing two or more monomers selected from the monomer group by using a polymerization catalyst such as a Ziegler-Natta catalyst or a metallocene catalyst. Specific examples of the polymer mainly composed of olefin monomer units include: propylene-based polymers such as a polypropylene, an ethylene-propylene copolymer, a propylene-butene copolymer and an ethylene-propylene-butene copolymer. The (a) modified polyolefin-based resin containing a polymer mainly composed of olefin monomer units may comprise one of these propylene-based polymers alone or a combination of two or more of these polymers. Further, a polymer other than the propylene-based polymer, which is a polymer mainly composed of the other olefin monomer units, may be employed in combination with the propylene-based polymer for the (a) modified polyolefin-based resin containing a polymer mainly composed of olefin monomer units.

The polymer mainly composed of olefin monomer units is preferably a polymer produced by using a metallocene catalyst as a polymerization catalyst, more preferably a propylene-based polymer produced by using a metallocene catalyst as a polymerization catalyst, from the viewpoint of improving adhesion to a substrate including a non-polar substrate such as polyolefin, water resistance, gasohol resistance, and other properties of the dispersion resin composition.

Moreover, the polymer mainly composed of olefin monomer units is preferably a propylene-based polymer produced by using a metallocene catalyst and which has a melting point (Tm) measured by differential scanning calorimetry (DSC) of 60°C to 165°C, from the viewpoint of improving physical properties of the dispersion resin composition, such as adhesion to a non-polar substrate such as a polyolefin substrate, water resistance and gasohol resistance.

As the metallocene catalyst described above, a known metallocene catalyst is available. Specifically, a catalyst obtained by combining the following components (1) and (2), and also (3) if necessary is preferable..

- Component (1); a metallocene complex that is a compound of a transition metal of groups IV to VI of the periodic table, having at least one of conjugate five-membered ring ligands

- Component (2); an ion-exchangeable lamellar silicate salt
- Component (3); an organoaluminium compound

The polymer mainly composed of olefin monomer units produced by using the metallocene catalyst has characteristics such as a narrow range of molecular weight distribution, excellent random copolymerization property, a narrow range of composition distribution, and a wide range of copolymerizable monomer types. Thus, this polymer is preferable as the polymer mainly composed of olefin monomer units in the present invention.

The measurement of Tm by DSC in the present invention may be performed under the following condition. Using a DSC measurement device (manufactured by Seiko Instruments Inc.), about 10 mg of a sample is melted at 200°C for 5 minutes, and the temperature is lowered at a rate of 10°C/min to -60°C to crystallize the sample, and further the temperature is increased at 10°C/min to 200°C to melt the sample, and then the melting peak temperature is measured and estimated as Tm. Tm value of the Examples described later was measured under this condition.

In the present invention, although the monomer component of the (a) modified polyolefin-based resin containing a polymer mainly composed of olefin monomer units is not particularly limited, 60 mol% or more of a propylene component is preferable, and further 80 mol% or more of a propylene component is more preferable. When the propylene component is less than 60 mol%, adhesion property to polyolefin substrates such as a propylene substrate could decrease.

In the present invention, although the molecular weight of the (a) modified polyolefin-based resin containing a polymer mainly composed of olefin monomer units is not particularly limited, the weight-average molecular weight is preferably 10,000 to 500,000, and further preferably 30,000 to 300,000. The weight-average molecular weight in the present invention including the Examples is a value by measuring according to gel permeation chromatography (standard substance: polystyrene). The modified polyolefin resin described later also preferably has a weight-average molecular weight within the range described above for similar reasons.

In the present invention, the (a) modified polyolefin-based resin containing a polymer mainly composed of olefin monomer units is a modified polyolefin resin. The modified polyolefin resin means the resin obtained by modifying the polyolefin-based resin containing a polymer mainly composed of olefin monomer units. Although the condition for modifying is not particularly, limited, a polarity-imparting agent is used for modifying, and it is more preferable to graft-polymerize a polarity-imparting agent to the polyolefin-based resin. By employing the modified polyolefin resin obtained by using a polarity-imparting agent, the physical properties such as adhesion and gasohol resistance of the dispersion resin composition can be improved.

Examples of the polarity-imparting agent include: chlorine; an unsaturated carboxylic acid, and the derivative and the anhydride of the unsaturated carboxylic acid; and a radical polymerizable monomer, and one or more types selected from the examples are used. Two or more types compounds selected from the examples may also be used in combination for the polarity-imparting agent.

In the description described below, when the polyolefin-based resin containing a polymer mainly composed of olefin monomer units is modified by using at least chlorine as a polarity-imparting agent, obtained modified resin is referred to as a chlorinated modified polyolefin resin. On the other hand, when the polyolefin-based resin containing a polymer mainly composed of olefin monomer units is modified without using chlorine as a polarity-imparting agent, the obtained modified resin is referred to as a non-chlorinated modified polyolefin resin. Further, regardless of whether chlorine is used as a polarity-imparting agent, when the polyolefin-based resin containing a polymer mainly composed of olefin monomer units is modified with polarity-imparting agents, the obtained modified resin is referred to as a modified polyolefin resin.

Although the content of chlorine in the chlorinated modified polyolefin resin is not particularly limited, it is preferably 2% by weight to 35% by weight, and particularly preferably 4% by weight to 30% by weight. When the content of chlorine is less than 2% by weight, the adhesive property to various types of non-polar substrates could be improved, but the water dispersibility could deteriorate. In contrast, when the content of chlorine is more than 35% by weight, the adhesive property to various types of non-polar substrates could deteriorate.
A content rate of chlorine may be measured according to JIS-K7229. In other words, the content rate of chlorine may be measured using the "oxygen flask combustion method" in which a chlorine-containing resin is burned under an oxygen atmosphere, and a generated chlorine gas is absorbed with water and then the absorbed chlorine is quantified by titration.

An unsaturated carboxylic acid in the present invention means an unsaturated compound containing a carboxyl group. A derivative of the unsaturated carboxylic acid means mono- or di-ester, amide, imide, or the like of the unsaturated compound containing a carboxy group. An anhydride of the unsaturated carboxylic acid means an anhydride of the unsaturated compound containing a carboxy group. Examples of the unsaturated carboxylic acid compound, and the derivative and the anhydride of the unsaturated carboxylic acid include: fumaric acid, maleic acid, itaconic acid, citraconic acid, aconitic acid, nadic acid, and their anhydrides; fumarate esters such as methyl fumarate, ethyl fumarate, propyl fumarate, butyl fumarate, dimethyl fumarate, diethyl fumarate, dipropyl fumarate, and dibutyl fumarate; maleate esters such as methyl maleate, ethyl maleate, propyl maleate, butyl maleate, dimethyl maleate, diethyl maleate, dipropyl maleate, and dibutyl maleate; and maleimides such as a maleimide and N-phenylmaleimide, and the derivative thereof.

Among them, the unsaturated carboxylic acid and the anhydride of the unsaturated carboxylic acid are preferable, and the anhydride of the unsaturated carboxylic acid is more preferable. As the anhydride of the unsaturated carboxylic acid, itaconic anhydride and maleic anhydride are preferred. In the present invention, one compound or two or more compounds are selected from an unsaturated carboxylic acid, and the derivative and the anhydride of the unsaturated carboxylic acid, and may be used alone or in combination.

The graft weight of the unsaturated carboxylic acid, and the derivative and the anhydride of the unsaturated carboxylic acids in the modified polyolefin resin is preferably 0.1% by weight to 20% by weight, and particularly preferably 0.5% by weight to 12% by weight. The graft weight of the unsaturated carboxylic acid, and the derivative and the anhydride of the unsaturated carboxylic acids in the non-chlorinated modified polyolefin resin is preferably 0.5% by weight to 20% by weight, and particularly preferably 1% by weight to 10% by weight. The graft weight of the unsaturated carboxylic acid and the derivative and the anhydride of the unsaturated carboxylic acids in the modified polyolefin resin means a total of the graft weights of two or more types of the unsaturated carboxylic acid and the derivative and the anhydride of the unsaturated carboxylic acids when those are used in combination.

When a compound is selected from the unsaturated carboxylic acids, and the derivatives and the anhydrides of the unsaturated carboxylic acids alone as the polarity-imparting agent and if the graft weight is less than the preferred range as described above, the polarity of a dispersion resin composition will decrease and the water dispersibility will deteriorate. In contrast, if the graft weight is too large, a large amount of unreacted substances is left, as the result, the adhesive property to a nonpolar adherend will decrease, which is not preferred.

The graft weight percentage(%) of the unsaturated carboxylic acids, and the derivatives and the anhydrides of the unsaturated carboxylic acids may be calculated based on alkalimetry or Fourier-transform infrared spectroscopy. The values in the Examples described later were measured by this method.

A radical polymerizable monomer in the present invention includes a (meth)acryl compound and a vinyl compound. The (meth)acryl compound includes a compound containing at least one (meth)acryloyl group in a molecule [the (meth)acryloyl group means any one of an acryloyl group and/or a methacryloyl group]. Examples of the radical polymerizable monomer include: (meth)acrylic acid; a (meth)acrylate ester such as methyl(meth)acrylate, ethyl (meth)acrylate, n-butyl(meth)acrylate, cyclohexyl (meth)acrylate, isobornyl(meth)acrylate, glycidyl (meth)acrylate, octyl(meth)acrylate, lauryl(meth)acrylate, tridecyl(meth)acrylate, stearyl(meth)acrylate, benzyl (meth)acrylate, phenyl(meth)acrylate, dimethylaminoethyl (meth)acrylate, diethylaminoethyl(meth)acrylate, hydroxyethyl(meth)acrylate, 2-hydroxyethyl(meth)acrylate, N,N-dimethylaminoethyl(meth)acrylate, and acetoacetoxyethyl (meth)acrylate; a (meth)acrylamide such as N-methyl(meth)acrylamide, N-ethyl (meth)acrylamide, N-propyl(meth)acrylamide, N-isopropyl (meth)acrylamide, N-butyl (meth)acrylamide, N-isobutyl (meth)acrylamide, N-t-butyl(meth)acrylamide, N,N-dimethyl (meth)acrylamide, N,N-dimethylaminopropyl(meth)acrylamide, N,N-methylene-bis(meth)acrylamide, N-methylol (meth)acrylamide, and hydroxyethyl(meth)acrylamide; (meth)acryloyl morpholine; n-butylvinyl ether; 4-hydroxybutylvinyl ether; and dodecylvinyl ether. Among them, methyl(meth)acrylate, ethyl(meth)acrylate, cyclohexyl(meth)acrylate, and lauryl(meth)acrylate are preferable. The (meth)acrylate ((meth)acrylic acid) means a methacrylate (methacrylic acid) and/or an acrylate (acrylic acid). A methacrylate is preferable as the (meth)acrylate. The radical polymerizable monomer may be used alone or in combination of two or more types thereof, and a mixed ratio of the combination may be decided as appropriate.

As the (meth)acryl compound, at least one or more types of compounds selected from (meth)acrylate esters of the following Formula (A) are contained preferably. The content ratio thereof is preferably 20% by weight or more per 100% by weight of the (meth)acryl compound. When a (meth)acryl compound containing at least one or more types of compounds selected from the (meth)acrylate esters of Formula (A) below is used as a polarity-imparting agent, the molecular weight distribution of the modified polyolefin resin can become narrowed, and the compatibility of the modified polyolefin resin with other resin can be more enhanced.

$$CH_2=CR_6COOR_7 \qquad (A)$$

(In Formula (A), $R_6$ represents H or $CH_3$, $R_7$ represents $C_mH_{2m+1}$, and m represents an integer of 1 to 18, respectively.) The n of Formula (A) is preferably an integer of 8 to 18.

The graft weight of the radical polymerizable monomer in the modified polyolefin resin is preferably 0.1% by weight to 30% by weight, and particularly preferably 0.5% by weight to 20% by weight. If the radical polymerizable monomer is used alone as the polarity-imparting agent and when the graft weight is less than 0.1% by weight, the water dispersibility of the modified polyolefin resin in the dispersion resin composition, the compatibility of the dispersion resin composition with the resins, and the adhesive property to a substrate of the dispersion resin composition, its paint composition, its ink composition, its adhesive composition or its primer composition will deteriorate. In contrast, when the graft weight is more than 30% by weight, an ultrahigh molecular weight body is formed due to high reactivity, and thus the solubility of the dispersion resin composition in a solvent will deteriorate, or the amounts of generated homopolymers and copolymers that are not grafted to a polyolefin skeleton will increase, which are not preferable.

The graft weight of the radical polymerizable monomer can be calculated based on Fourier-transform infrared

spectroscopy or $^1$H-NMR. The values in the Examples described later were measured by this method.

The graft weight of the radical polymerizable monomer in the non-chlorinated modified polyolefin resin is preferably 0.5% by weight to 30% by weight, and particularly preferably 1% by weight to 20% by weight.

When a chlorinated modified polyolefin resin is exposed to an ultraviolet ray or high heat, dehydrochlorination will occur in some cases, and the chlorinated modified polyolefin resin could be deteriorated. Such deterioration may cause problems such as coloring of the chlorinated modified polyolefin resin, decrease in physical properties including adhesive property of the dispersion resin composition to a non-polar substrate like a polyolefin material including a polypropylene material, and deterioration of working environment due to liberated hydrochloric acid, or the like. Therefore, a stabilizer may be desirably added to the chlorinated modified polyolefin resin. The amount of the stabilizer to be added is preferably 0.1% by weight to 5% by weight to the resin components (solid contents) in the dispersion resin composition for obtaining the effects. As the stabilizer, a compound compatible with the chlorinated modified polyolefin resin is preferable, and an epoxy compound is included. The epoxy equivalent of the epoxy resin is preferably about 100 to 500. As the preferable epoxy resin, the epoxy resin having one or more epoxy groups in a molecule thereof is included.

Specific examples of the epoxy compound include: oils such as an epoxidized soybean oil and an epoxidized linseed oil that are obtained by epoxidizing vegetable oils having natural unsaturated groups with peracids such as peracetic acid; epoxidized fatty acid esters obtained by epoxidizing unsaturated fatty acids such as oleic acid, tall oil fatty acid, and soybean oil fatty acid; an epoxidized alicyclic compound represented by epoxidized tetrahydrophthalate; a compound obtained by condensing between an epichlorohydrin and a compound selected from bisphenol A and a polyvalent alcohol, such as bisphenol A glycidyl ether, ethylene glycol glycidyl ether, propylene glycol glycidyl ether, glycerol polyglycidyl ether, and sorbitol polyglycidyl ether; monoepoxy compounds represented by butylglycidyl ether, 2-ethylhexylglycidyl ether, decylglycidyl ether, stearylglycidyl ether, allylglycidyl ether, phenylglycidyl ether, sec-butylphenylglycidyl ether, tert-butylphenylglycidyl ether, and phenol polyethylene oxide glycidyl ether; and a compound used as a stabilizer for polyvinyl chloride resins, for example, metal soaps such as calcium stearate and lead stearate, organic metal compounds such as dibutyltin dilaurate and dibutyl maleate, and hydrotalcite compounds. These epoxy compounds may be used alone or in combination of two or more types thereof. Among them, monoepoxy compounds are preferred.

In the present invention, among the abovementioned polarity-imparting agents, any of the following (i), (ii), (iii) and (iv) are preferably used, (ii) and (iii) are more preferably used, and (iii) is still more preferably used.

(i) one or more types of compounds selected from an unsaturated carboxylic acid and the anhydride of the unsaturated carboxylic acid

(ii) a combination of chlorine and one or more types of compounds selected from the group consisting of an unsaturated carboxylic acid, the derivative and the anhydride of the unsaturated carboxylic acid, and a radical polymerizable monomer

(iii) a combination of chlorine and one or more types of compounds selected from an unsaturated carboxylic acid, the derivative of the unsaturated carboxylic acid, and the anhydride of the unsaturated carboxylic acid

(iv) a combination of a radical polymerizable monomer and one or more types of compounds selected from an unsaturated carboxylic acid and the anhydride of the unsaturated carboxylic acid

The effects of the present invention are remarkably exerted by using the chlorinated modified polyolefin resin obtained by using a polarity-imparting agent such as (ii) and (iii) as the component (a). In other words, a dispersion resin composition whose water dispersibility is favorable, whose solution does not increase its viscosity and does not turn into a gel, and whose remarkably excellent dispersion stability is maintained even with the passage of time, can be obtained even when an alcohol and/or an ether are contained in the dispersion resin composition. Moreover, even when the dispersion resin composition is added to a paint, an ink, an adhesive, or a primer that each contains an alcohol and/or an ether, a dispersion resin composition whose water dispersibility is favorable, whose solution does not increase its viscosity and does not turn into a gel, and whose remarkably excellent dispersion stability is maintained even with the passage of time, can be obtained.

A method for obtaining a modified polyolefin resin by modifying a polyolefin resin using a polarity-imparting agent is not particularly limited. The polyolefin resin, which is selected from the examples of the (a) polyolefin-based resin containing a polymer mainly composed of olefin monomer units, may be employed. Obtaining the modified polyolefin resin by graft-polymerizing the polarity-imparting agent to the polyolefin resin may be performed by known methods. Examples of the methods include: a solution method in which the mixture of the polyolefin resin and the polarity-imparting agent is heated and dissolved in a solvent that dissolves the mixture, (that is the solvent including aromatic compounds such as toluene and xylene,) and a radical generator is added to the resultant solution; and a melting method in which materials such as the polyolefin resin, the polarity-imparting agent, and the radical generator are added into an apparatus such as a Banbury mixer, a kneader, and an extruder to knead the mixture of the materials. When one or more types of compounds selected from the group consisting of, except chlorine, an unsaturated carboxylic acid, the derivative and the anhydride of the unsaturated carboxylic acid, and the radical polymerizable monomer is(are) used as the polarity-imparting agents, the polarity-imparting agents may be added together or sequentially to the system during the solution method and the melting method.

In the present invention, a process of removing low molecular weight components may be performed for producing the modified polyolefin resin. The process of removing low molecular weight components is a process for removing components having low molecular weights that are contained in the produced modified polyolefin resin. This process is typically performed during the production of the modified polyolefin resin in order to improve solvent resistance or similar properties. The process of removing low molecular weight components is preferably performed after graft-polymerizing the polarity-imparting agent, for example, after graft-polymerizing an unsaturated carboxylic acid, and the derivative and the anhydride thereof. The process of removing low molecular weight components may be performed by a known method such as solvent removal. Specifically, for example, low molecular weight components can be removed by washing products obtained by modifying the polyolefin resin using the polarity-imparting agent, with a solvent such as methyl ethyl ketone several times. In the present invention, products excellent in various physical properties can also be obtained by using the modified polyolefin resin produced without performing the process of removing low molecular weight components.

The order of graft-polymerizing the polarity-imparting agent to the polyolefin resin is not particularly limited.

The radical generator that may be used in a reaction of graft-polymerizing the polarity-imparting agent to the polyolefin resin may be appropriately selected from the known compounds. Particularly, an organic peroxide-based compound is preferably used. Examples of the organic peroxide-based compound include di-t-butyl peroxide, dicumyl peroxide, t-butylcumyl peroxide, benzoyl peroxide, dilauryl peroxide, cumene hydroperoxide, t-butyl hydroperoxide, 1,1-bis(t-butylperoxy)-3,5,5-trimethylcyclohexane, 1,1-bis(t-butylperoxy)-cyclohexane, cyclohexanone peroxide, t-butyl peroxybenzoate, t-butyl peroxyisobutyrate, t-butylperoxy-3,5,5-trimethyl hexanoate, t-butylperoxy-2-ethyl hexanoate, t-butylperoxyisopropyl carbonate, and cumylperoxy octoate. The amount of the radical generator to be added to the polyolefin resin is preferably 1% by weight to 50% by weight, and particularly preferably 3% by weight to 30% by weight based on the weight of the polarity-imparting agent. When the amount to be added is less than this range, a graft-polymerizing rate could decrease. In contrast, when the amount exceeds this range, it will be uneconomical.

When the compound selected from an unsaturated carboxylic acid, the derivative of the unsaturated carboxylic acid, the anhydride of the unsaturated carboxylic acid, and a radical polymerizable monomer is used as the polarity-imparting agent, a reaction aid may be used during graft-polymerization. Examples of the reaction aid include styrene, o-methylstyrene, p-methylstyrene, $\alpha$-methylstyrene, divinylbenzene, hexadiene, and dicyclopentadiene.

When chlorine is used together with a compound except chlorine, that is, one or more types of compounds selected from the group consisting of an unsaturated carboxylic acid, the derivative and the anhydride thereof, and a radical polymerizable monomer as the polarity-imparting agent, the order of graft-polymerizing them to the polyolefin resin is not particularly limited either. Typically, it is preferable to perform a chlorination process at last after graft-polymerizing the compounds except chlorine. In other words, in the solution method or the melting method as described above, after graft-polymerizing one or more types of compounds selected from an unsaturated carboxylic acid, the derivative of the unsaturated carboxylic acid, the anhydride of the unsaturated carboxylic acid, and the radical polymerizable monomer to the polyolefin resin, chlorination by a method described later is preferably performed. When the chlorination process is performed prior to the graft-polymerization of the other compounds, the graft polymerization could cause dehydrochlorination, which is not preferred. However, if necessary, chlorination may be performed prior to the graft-polymerization and then the graft-polymerization of the other compounds may be performed by the solution method at low temperature.

When chlorine and a radical polymerizable monomer are used in combination and a compound containing an ester such as a (meth)acrylate ester is used as the radical polymerizable monomer, the ester could be decomposed by the chlorination. Therefore, in this case, it is preferable to graft-polymerize the compound containing an ester such as a (meth)acrylate ester after the chlorination process.

A preferable method for chlorination is, for example, that after the modified polyolefin resin is obtained by graft-polymerizing the polarity-imparting agent except chlorine and the resultant is dissolved into a solvent such as chloroform, gaseous chlorine is blown into the obtained solution while the solution is irradiated with ultraviolet rays or is under the presence of the radical generator, and thus the chlorinated modified polyolefin resin is obtained. The content of chlorine (introduction rate of chlorine) varies depending on the difference of elements such as a type of the polyolefin resin, a reaction scale, and a reaction apparatus, and thus cannot be uniformly defined. The content of chlorine may be adjusted while the amount and the blowing time of chlorine are monitored.

The dispersion resin composition of the present invention contains the (b) nitrogen-containing polyoxyalkylene derivative as the second component. The (b) nitrogen-containing polyoxyalkylene derivative is added to stabilize the dispersed bodies when the (a) modified polyolefin-based resin containing a polymer mainly composed of olefin monomer units is dispersed in (d) water, and (b) contains a hydrophilic group moiety and a hydrophobic group moiety, and works as a surfactant. The (b) nitrogen-containing polyoxyalkylene derivative in the present invention is a compound that contains ethylene oxide and/or propylene oxide at the hydrophilic group moiety, nitrogen at the linking group (for example,

an amine and an amide), and an alkyl group at the hydrophobic group moiety. Examples thereof include an alkylamine alkylene oxide adduct, an alkyldiamine alkylene oxide adduct, and an alkylamide alkylene oxide adduct.

Examples of the (b) nitrogen-containing polyoxyalkylene derivative include: polyoxyethylene alkylamines of the following Formula (I), polyoxypropylene alkylamines of the following Formula (II), and polyoxyethylenepropylene alkylamines of the following Formula (III).

[Chem. 4]

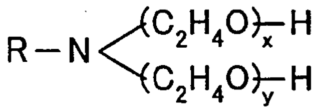

···(I)

(In Formula (I), R represents an alkyl group having 1 to 50 carbon atoms, x represents an integer of 1 to 49, y represents an integer of 1 to 49, and x+y represents an integer of 2 to 50.)

[Chem. 5]

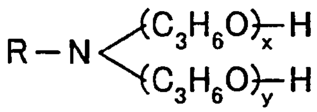

···(II)

(In Formula (II), R represents an alkyl group having 1 to 50 carbon atoms, x represents an integer of 1 to 49, y represents an integer of 1 to 49, and x+y represents an integer of 2 to 50.)

[Chem. 6]

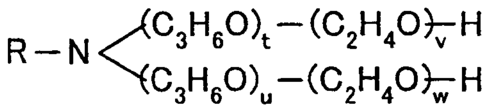

···(III)

(In Formula (III), R represents an alkyl group having 1 to 50 carbon atoms, t represents an integer of 1 to 47, u represents an integer of 1 to 47, v represents an integer of 1 to 47, w represents an integer of 1 to 47, t+v represents an integer of 2 to 48, u+w represents an integer of 2 to 48, and t+u+v+w represents an integer of 4 to 50.)

As the (b) nitrogen-containing polyoxyalkylene derivative, it is preferable to comprise one or more types selected from the group consisting of compounds of Formula (I), compounds of Formula (II), and compounds of Formula (III), and it is more preferable to comprise one or two or more types selected from the group consisting of polyoxyethylene alkylamine of Formula (I) and polyoxyethylenepropylene alkylamine of Formula (III).

The R in Formula (I), Formula (II), and Formula (III) represent an alkyl group having 1 to 50 carbon atoms, preferably an alkyl group having 6 to 30 carbon atoms, and further preferably an alkyl group having 8 to 20 carbon atoms. The number of carbon atoms of R may be one type, or R may be a mixture of compounds having different numbers of carbon atoms. When the number of carbon atoms of R is more than 50, a dispersion failure will occur.

The x and y in Formula (I) and Formula (II) indicate addition molar numbers of an ethylene oxide and a propylene oxide, respectively, each of which represents an integer of 1 to 49, preferably an integer of 1 to 19, and more preferably an integer of 1 to 15. The numbers of x and y may be the same or different each other, and the total of x and y (x+y) represents an integer of 2 to 50, preferably an integer of 2 to 20, and more preferably an integer of 2 to 16. When x+y represents less than 2, an emulsification will not work. When x+y exceeds 50, an emulsification failure will occur, or even if emulsification works, the water resistance of a coating will deteriorate.

Each of t and u in Formula (III) indicates an addition molar number of a propylene oxide and represents an integer of 1 to 47, and preferably an integer of 1 to 17. The numbers of t and u may be the same or different each other. Each of v and w in Formula (III) indicates an addition molar number of an ethylene oxide and represents an integer of 1 to 47, and preferably an integer of 1 to 17. The numbers of v and w may be the same or different each other. The numbers of t, u, v, and w may be the same or different each other, and the total of t and v (t+v) represents an integer of

2 to 48, and preferably an integer of 2 to 18. The total of u and w (u+w) represents an integer of 2 to 48, and preferably an integer of 1 to 18. The total of t, u, v, and w (t+u+v+w) represents an integer of 4 to 50, and preferably an integer of 4 to 20. Formula (III) may be a random copolymer or a block copolymer. In other words, a repeating unit ($C_2H_4O$)) of an ethylene oxide and a repeating unit of a propylene oxide ($C_3H_6O$) in Formula (III) may be alternately connected each other, or one or more of each of the units may be connected to form blocks and each of the blocks may be further connected.

The HLB value of the (b) nitrogen-containing polyoxyalkylene derivative is 5 to 17, and preferably 10 to 15. When the (b) nitrogen-containing polyoxyalkylene derivative has the HLB value within this range, the water dispersibility and the dispersion stability of the dispersion resin composition can be maintained favorable. HLB is an abbreviation of Hydrophile-Lipophile Balance and represents a balance of hydrophilicity-lipophilicity. HLB may be calculated by, for example, based on the Griffin's formula, that is HLB=[{(molecular weight of hydrophilic group moiety)/(total molecular weight)}xl00]/5.

In the present invention, the amount of the (b) nitrogen-containing polyoxyalkylene derivative to be added may be 5 parts or more to 40 parts or less, preferably may be 10 parts or more to 35 parts or less, and more preferably may be 15 parts or more to 35 parts or less, per 100 parts of the (a) polyolefin-based resin containing a polymer mainly composed of olefin monomer units. When the amount of (b) exceeds 40 parts to be added, the amount exceeds an amount for forming the dispersion resin composition, which could significantly degrade the adhesion and the water resistance of the dispersion resin composition. Moreover, when the dispersion resin composition is formed into a dried coating, a plasticization effect and a bleeding phenomenon could occur and cause blocking easily. In contrast, when the amount is less than 5 parts, the dispersion failure of the resin could occur.

In the present invention, besides the (b) nitrogen-containing polyoxyalkylene derivative, another surfactant may be used together. Any of a nonionic surfactant and an anionic surfactant may be used as the surfactant. The nonionic surfactant is preferable because the water resistance of the emulsified dispersion resin composition becomes favorable.

Examples of the nonionic surfactant include a polyoxyethylene alkyl ether, a polyoxyethylene polyoxypropylene alkyl ether, a polyoxyethylene derivative, a polyoxyethylene fatty acid ester, a polyoxyethylene polyvalent alcohol fatty acid ester, polyoxyethylene polyoxypropylene polyol, a sorbitan fatty acid ester, polyoxyethylene cured castor oil, and a polyoxyalkylene polycyclic phenyl ether.

Examples of the anionic surfactant include an alkyl sulfate ester salt, a polyoxyethylene alkyl ether sulfate salt, an alkylbenzene sulfonate salt, an $\alpha$-olefin sulfonate salt, a methyl taurate salt, a sulfosuccinate salt, an ether sulfonate salt, an ether carboxylate salt, a fatty acid salt, a naphthalene sulfonic acid formalin condensate, an alkylamine salt, a quaternary ammonium salt, an alkyl betaine, and an alkylamine oxide. Preferably, a polyoxyethylene alkyl ether sulfate salt and a sulfosuccinate salt are employed.

The dispersion resin composition of the present invention contains the (c) basic substance as the third component. By containing the (c) basic substance, an acid component in the (a) modified polyolefin-based resin containing a polymer mainly composed of olefin monomer units is neutralized to enhance the dispersibility in water and a hydrophilic substance. Examples of the basic substance include sodium hydroxide, potassium hydroxide, ammonia, methylamine, propylamine, hexylamine, octylamine, ethanolamine, propanolamine, diethanolamine, N-methyldiethanolamine, dimethylamine, diethylamine, triethylamine, N,N-dimethylethanolamine, 2-dimethylamino-2-methyl-1-propanol, 2-amino-2-methyl-1-propanol, morpholine, and dimethylethanolamine. Preferably, ammonia, triethylamine, 2-amino-2-methyl-1-propanol, morpholine, and dimethylethanolamine are employed. These may be used alone or in combination of two or more types. The amount of the (c) basic substance to be used may be adjusted appropriately to an amount of the acid component in the modified polyolefin resin. In general, the amount is adjusted so that the pH level of the dispersion resin composition can be maintained preferably 5 or more, more preferably 6 to 10.

The dispersion resin composition of the present invention contains (d) water as the fourth component. By containing the fourth component of (d), the (a) modified polyolefin-based resin containing a polymer mainly composed of olefin monomer units can be dispersed in water. As the water, deionized water, distilled water, or the like may be used. Although the temperature of water is not particularly limited, it may be set appropriately in accordance with the temperature capable of emulsifying (dispersing) the resin component, and preferably it may be set so that the water (hot water) can keep a temperature of the reaction system. A content ratio of water to the dispersion resin composition may be adjusted appropriately in accordance with the ratio capable of emulsifying (dispersing) the resin components.

The dispersion resin composition of the present invention contains all of each component (a) to (d) and may contain other components optionally.

In the present invention, the dispersion resin composition may contain a cross-linking agent depending on the uses and purposes. The cross-linking agent means a compound that reacts with a hydroxy group, a carboxy group, an amino group, or the other groups of the (a) modified polyolefin-based resin containing a polymer mainly composed of olefin monomer units, the (b) nitrogen-containing polyoxyalkylene derivative, the (c) basic substance, or the other compounds to form a crosslinking structure. A cross-linking agent soluble in water itself may be used, or a cross-linking agent dispersed in water by any method may also be used. Examples of the cross-linking agent include a block isocyanate compound, an aliphatic or aromatic epoxy compound, an amine-based compound, and an amino resin. The method of

adding the cross-linking agent is not particularly limited. For example, the cross-linking agent may be added during the process for dispersing the composition in water or after the composition is dispersed in water.

The dispersion resin composition of the present invention may be blended with, besides the compounds described above, an aqueous acryl resin, an aqueous urethane resin, a lower alcohol, a lower ketone, a lower ester, a preservative, a leveling agent, an antioxidant, a light stabilizer, an ultraviolet ray absorber, a dye, a pigment, a metal salt, an acid, for example, depending on the uses as needed.

The pH level of the dispersion resin composition of the present invention is preferably 5 or more, and more preferably, 6 to 10. When the pH level is less than 5, neutralization is insufficient, and the (a) modified polyolefin-based resin containing a polymer mainly composed of olefin monomer units could not be dispersed in the other components, or even when dispersed, the (a) modified polyolefin-based resin containing a polymer mainly composed of olefin monomer units could be easily precipitated over time to be separated from the other components. As a result, the storage stability could be lowered, which is not preferred. In contrast, when the pH level exceeds 10, problems could occur on the compatibility with the other components and on safety during operation.

The dispersion resin composition of the present invention may be produced by adding the components (a) to (d) and some components to be blended as needed to the reaction system and dispersing the resultant mixture by using a melting aid or the like as needed. The first example of a method for producing the dispersion resin composition of the present invention comprises (1) a process of dissolving a modified polyolefin-based resin containing a polymer mainly composed of olefin monomer units in a solvent (melting aid), (2) a process of adding a nitrogen-containing polyoxyalkylene derivative into the reaction system, (3) a process of adding a basic substance into the reaction system, (4) a process of adding water into the reaction system, and (5) a process of removing the solvent. As the order of the processes in this first example, the process (1) and the process (5) may be the first and the last, respectively, and at least two processes selected from the process (2), the process (3), and the process (4) may be performed at the same time.

In the process (1), as the solvent (melting aid), any solvent capable of dissolving the component (a) may be used without limitation. Examples of the solvent include toluene and xylene which belong to an aromatic compound, and tetrahydrofuran, methylcyclohexane, and methyl ethyl ketone which are organic solvents.

As the second example of a method for producing the dispersion resin composition of the present invention, a method of dispersing and reacting the components (a) to (d) by adding collectively the components in the reaction system and stirring them at high temperature is included. For example, after the components (a) to (d) are collectively added and stirred, the resultant mixture is controlled to keep an internal pressure 0.2MPa or more, and the resultant mixture is maintained for 1 hour and then is cooled. By a decompression treatment, the solvent will not be completely removed in some cases. However, according to the production method by adding collectively the material components, the products of an aqueous composition not containing any solvent are obtained, and thus the process of removing the solvent by a decompression treatment or the like can be omitted, which is preferable.

In the present invention of the production for the dispersion resin composition, the method of dispersing each component may be performed by any methods including, a forcible emulsification method, a phase inversion emulsification method, a D phase emulsification method, a gel emulsification method or the like. During the production, equipment (s) are applicable, including: a stirring blade, a disperser, a homogenizer, or the like for single stirring; the combination thereof for multiple stirring; a sand mill; and a multiaxial extruder.

In the dispersion resin composition of the present invention, the products are prepared so that the average particle diameter of the resin emulsified and dispersed in water can become preferably 300nm or less, more preferably 200nm or less. When the average particle diameter exceeds 300nm, storage stability of the dispersion resin composition and compatibility of the dispersion resin composition with other resin could deteriorate, and further, coating physical properties such as adhesion to a substrate, solvent resistance, water resistance, and blocking resistance could decrease. The particle diameter may be reduced without limitation, however, in this case, the content of the (b) nitrogen-containing polyoxyethylene derivative in the dispersion resin composition typically increases. As a result, coating physical properties such as adhesion to substrates, water resistance, solvent resistance and blocking resistance tend to easily decrease. Therefore, generally, the average particle diameter is preferably adjusted to be 30 nm or more. The average particle diameter in the present invention may be measured by a particle size distribution measurement using a light diffusion method, and the values of the Examples described later are obtained by this method. The particle diameter may be adjusted by selecting the production conditions, for example, by appropriately selecting an amount of the (b) nitrogen-containing polyoxyalkylene derivative to be added, a stirring force while the resin is emulsified in water, or the like.

Among the methods for dispersing each component as described above, a method using a phase inversion emulsification method, multiple agitation, a sand mill, a multiaxial extruder, or the like is preferably used, in order that the average particle diameter of the resin in the dispersion resin composition of the present invention can be adjusted to 300nm or less. The phase inversion emulsification method is a method for inverting phases by adding water to an organic solvent or the like. The multiple stirring is a method having a high share.

The dispersion resin composition of the present invention can work as an intermediate medium for a substrate that has low adhesive properties and is difficult to be coated with paint or the like. For example, the dispersion resin

composition is useful as an adhesive between polyolefin-based substrates such as polypropylene and polyethylene substrates having poor adhesive properties, and can be used with or without a surface treatment to the substrate surface by plasma, corona, or the like.

The dispersion resin composition of the present invention may contain the (e) an alcohol and/or an ether. When the dispersion resin composition of the present invention contains an alcohol and/or an ether, water dispersibility and dispersion stability are not affected. In the present invention, an alcohol means a compound that a hydroxy group (-OH) is bonded to a hydrocarbon group. An ether means a compound that a hydrocarbon group is bonded through a bond in which carbon atoms are at both sides of an oxygen atom (ether bond: C-O-C).

Examples of the (e) an alcohol and/or an ether include: n-hexanol, n-octanol, 2-octanol, 2-ethylhexanol, n-decanol, benzyl alcohol, ethylene glycol mono 2-ethylhexyl ether, propylene glycol mono n-butyl ether, dipropylene glycol mono n-butyl ether, tripropylene glycol mono n-butyl ether, propylene glycol mono 2-ethylhexyl ether, propylene glycol monophenyl ether, methyl alcohol, ethyl alcohol, n-propyl alcohol, isopropyl alcohol, n-butyl alcohol, sec-butyl alcohol, isobutyl alcohol, cyclohexyl alcohol, 2-methylcyclohexyl alcohol, tridecylalcohol, 4-hydroxy-4-methyl-2-pentanone, ethylene glycol, propylene glycol, diethylene glycol, triethylene glycol, dipropylene glycol, ethylene glycol monomethyl ether, ethylene glycol monoethyl ether, ethylene glycol monobutyl ether, diethylene glycol monoethyl ether, diethylene glycol monobutyl ether 2-ethyl-1-hexanol, and ethylene glycol mono 2-ethylhexyl ether. Among these, any of alcohols and ethers having 3 to 14 carbon atoms or the combination thereof are preferably used. In other words, one or more of compounds selected from the group consisting of: 4-hydroxy-4-methyl-2-pentanone, n-octanol, 2-octanol, 2-ethyl-1-hexanol, ethylene glycol monobutyl ether, ethylene glycol mono 2-ethylhexyl ether, propylene glycol mono n-butyl ether, dipropylene glycol mono n-butyl ether, methyl alcohol, ethyl alcohol, n-propyl alcohol, isopropyl alcohol, n-butyl alcohol, sec-butyl alcohol, and isobutyl alcohol, is(are) more preferably used. As the component (e), one or a combination of two or more types are may be used. The alcohol and/or the ether of the present invention include both, pure an alcohol and/or an ether, and an aqueous solution of an alcohol and/or an ether.

The amount of (e) an alcohol and/or an ether to be added is decided to have a weight ratio between the dispersion resin composition and the an alcohol and/or an ether of 100:0.1 to 100:100, preferably. It is more preferably 100:1 to 100:75, and still more preferably 100:1 to 100:50. When the dispersion resin composition is added to a paint, an ink, an adhesive or a primer that each contains an alcohol and/or an ether, it is preferably required to control the total amount of the alcohol and/or ether both of those contained in the paint, ink, adhesive or primer and of those contained in the dispersion resin composition in accordance with the abovementioned weight ratio.

The dispersion resin composition of the present invention may contain a solvent other than the (e) an alcohol and/or an ether. Specific examples of such the solvent include: a hydrocarbon based solvent such as a rubber solvent, mineral spirits, toluole, xylol, and solvent naphtha; an ester based solvent such as n-butyl acetate, isobutyl acetate, isoamyl acetate, methyl amyl acetate, and ethylene glycol monobutyl ether acetate; and a ketone based solvent such as methyl isobutyl ketone, cyclohexanone, ethyl n-amyl ketone, and diisobutyl ketone, thus organic solvents (organic solvent medium) are included.

Examples of the production method when the dispersion resin composition contains (e) an alcohol and/or an ether, include: a method of adding an alcohol and/or an ether together with water in the first example of the production method as described above; a method of adding an alcohol and/or an ether together with the components (a) to (d) in the second example of the production method; and a method of adding an alcohol and/or an ether to the composition obtained in the first example or the second example of the production method.

The dispersion resin composition of the present invention may be used by adding to a paint, an ink, a primer, an adhesive, or the like. Particularly, the dispersion resin composition may exert the effects of the present invention such as water dispersibility and dispersion stability by adding to a paint, an ink, a primer or an adhesive that include an organic solvent. By adding the dispersion resin composition of the present invention to a solvent, the present invention provides a composition of a paint, an ink, an adhesive or a primer that each contains the dispersion resin composition.

The composition of a paint, an ink, a primer and an adhesive of the present invention contain the abovementioned dispersion resin composition and the alcohol and/or the ether. The dispersion resin composition is as already described above. The alcohol and/or the ether are also the same with the abovementioned component (e) of the dispersion resin composition. The Alcohol and/or the ether contained in a paint composition, an ink composition, a primer composition or an adhesive composition are the typical compound among organic solvents to be added for achieving physical properties of paint or ink, as described in the prior arts. The paint composition, the ink composition, the primer composition, and the adhesive composition of the present invention contain an alcohol and/or an ether, regardless of whether the dispersion resin composition contains (e) an alcohol and/or an ether.

The weight ratio between the dispersion resin composition and the alcohol and/or the ether contained in the paint composition, the ink composition, the adhesive composition, or the primer composition of the present invention is preferably 100:0.1 to 100:100, more preferably 100:1 to 100:75, and still more preferably 100:1 to 100:50. When the dispersion resin composition contains (e) an alcohol and/or an ether, it is required to control the total amount of the alcohol and/or the ether both of those contained in the paint, ink, adhesive, or primer and of those contained in the dispersion resin

composition in accordance with the abovementioned weight ratio.

The paint composition, the ink composition, the adhesive composition, and the primer composition of the present invention may contain a solvent (solvent medium) other than the abovementioned alcohol and/or ether. Specific examples of such the solvent include: a hydrocarbon based solvent such as a rubber solvent, mineral spirits, toluole, xylol, and solvent naphtha; an ester based solvent such as n-butyl acetate, isobutyl acetate, isoamyl acetate, methyl amyl acetate, and ethylene glycol monobutyl ether acetate; and a ketone based solvent such as methyl isobutyl ketone, cyclohexanone, ethyl n-amyl ketone, and diisobutyl ketone, thus organic solvents (organic solvent medium) are included.

The paint composition, the ink composition, the adhesive composition, and the primer composition of the present invention may contain (f) a resin(s), that is at least one or more types of resins selected from: an acrylic resin, a polyester resin, a polyurethane resin, an epoxy resin, a polyether resin, a polycarbonate resin, an alkyd resin, a vinyl acetate resin, a modified polyolefin resin, and a chlorinated polyolefin resin. Among them, at least one or more types of resins selected from: an acrylic resin, a polyurethane resin, a polyester resin, an epoxy resin, a modified polyolefin resin, and a chlorinated modified polyolefin resin, which is(are) preferably used. The resins to be used are not particularly limited so long as they are such resins typically contained in a paint, an ink, an adhesive or a primer.

Examples of the acrylic resin include those obtained from: a polymerizable unsaturated monomer having one or more hydroxy groups and one or more polymerizable unsaturated bonds in one molecule; and a polymerizable unsaturated monomer capable of copolymerizing with the above monomer.

Specific examples of the polymerizable unsaturated monomer capable of copolymerizing with the polymerizable unsaturated monomer having one or more hydroxy groups and one or more polymerizable unsaturated bonds in one molecule are described below. Any of these may be used alone or in combination of two or more types. (Specific example i) an alkyl or cycloalkyl (meth)acrylate: for example, methyl (meth)acrylate, ethyl (meth)acrylate, n-propyl (meth)acrylate, i-propyl (meth)acrylate, n-butyl (meth)acrylate, i-butyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, cyclohexyl (meth)acrylate, methylcyclohexyl (meth)acrylate, t-butylcyclohexyl (meth)acrylate, cyclododecyl (meth)acrylate, and tricyclodecanyl (meth)acrylate.

(Specific example ii) polymerizable unsaturated monomer having an isobornyl group
(Specific example iii) polymerizable unsaturated monomer having an adamantyl group
(Specific example iv) polymerizable unsaturated monomer having a tricyclodecenyl group
(Specific example v) polymerizable unsaturated monomer having an aromatic ring; styrene, $\alpha$-methylstyrene, vinyltoluene, benzyl (meth)acrylate, etc.
(Specific example vi) polymerizable unsaturated monomer having an alkoxysilyl group
(Specific example vii) polymerizable unsaturated monomer having a fluorinated alkyl group
(Specific example viii) a polymerizable unsaturated monomer having photopolymerizable functional groups such as maleimide groups.
(Specific example ix) a vinyl compound: for example, N-vinylpyrrolidone, ethylene, butadiene, chloroprene, vinyl propionate, and vinyl acetate.
(Specific example x) polymerizable unsaturated monomer having a carboxy group: for example, (meth)acrylic acid, maleic acid, crotonic acid, and $\beta$-carboxyethyl acrylate.
(Specific example xi) a nitrogen-containing polymerizable unsaturated monomer: for example, (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylene bis (meth)acrylamide, ethylene bis (meth)acrylamide, dimethylaminoethyl (meth)acrylate, and adducts of glycidyl (meth)acrylate with amines.
(Specific example xii) a polymerizable unsaturated monomer having two or more polymerizable unsaturated groups in one molecule: for example, allyl (meth)acrylate and 1,6-hexanediol di(meth)acrylate.
(Specific example xiii) polymerizable unsaturated monomer having an epoxy group: for example, glycidyl (meth) acrylate, $\beta$-methylglycidyl (meth)acrylate, 3,4-epoxycyclohexylmethyl (meth)acrylate, 3,4-epoxycyclohexylethyl (meth) acrylate, 3,4-epoxycyclohexylpropyl (meth)acrylate, and allyl glycidyl ether.
(Specific example xiv) a (meth)acrylate having alkoxy-terminated polyoxyethylene chains
(Specific example xv) polymerizable unsaturated monomer having a sulfonic group
(Specific example xvi) a (meth)acrylic acid derivative:

(xvi-i) a monoester of (meth) acrylic acid with a dihydric alcohol having 2 to 8 carbon atoms, such as 2-hydroxyethyl (meth)acrylate, 2-hydroxypropyl (meth)acrylate, 3-hydroxypropyl (meth)acrylate, and 4-hydroxybutyl (meth)acrylate
(xvi-ii) an $\varepsilon$-caprolactone-modified product of the monoester of (meth) acrylic acid with a dihydric alcohol having 2 to 8 carbon atoms exemplified in (xvi-i)
(xvi-iii) N-hydroxymethyl (meth)acrylamide

(xvi-iv) a (meth) acrylate having hydroxy-terminated polyoxyethylene chains, etc.

As for the polyester resin, a polyester resin produced by ester reaction or transesterification reaction of acid components and alcohol components may be typically used. As the acid components, compounds generally used as acid components for the polyester resins production may be used. Examples of such acid components include aliphatic polybasic acids, alicyclic polybasic acids, and aromatic polybasic acids.

As the alcohol components, polyhydric alcohols may be used. Examples of the polyhydric alcohols are indicated as below:

Dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydrogenated bisphenol A, and hydrogenated bisphenol F;

Polylactone diols obtained by adding lactones such as ε-caprolactone to the dihydric alcohols described above; Ester diols such as bis (hydroxyethyl) terephthalate; Polyether diols such as alkylene oxide adducts of bisphenol A, polyethylene glycols, polypropylene glycols, and polybutylene glycols;

Trihydric or higher alcohols such as glycerin, trimethylolethane, trimethylolpropane, diglycerin, triglycerin, 1,2,6-hexanetriol, pentaerythritol, dipentaerythritol, tris(2-hydroxyethyl)isocyanuric acid, sorbitol, and mannitol; and Polylactone polyols obtained by adding lactones such as ε-caprolactone to the trihydric or higher alcohols.

The polyurethane resin to be used is not particularly limited, and the examples of the urethane dispersion produced by the following methods are included. (Production method i) Polyfunctional isocyanate compounds are reacted with polyols having two or more hydroxy groups in one molecule and a hydrophilizing agent containing both a hydroxy group and a carboxyl group such as dimethylolpropanediol and dimethylolbutanediol under the presence of a catalyst such as dibutyltin dilaurate in an isocyanate group excess state. The carboxylic acid in the resultant urethane prepolymer is neutralized with organic bases such as amines or inorganic bases such as potassium hydroxide and sodium hydroxide, and ion exchanged water is added to the resultant mixture to make the mixture water-based. And then, a chain extender agent is employed to make the obtained mixture into high-molecular weight, and thus urethane dispersion is produced. (Production method ii) An urethane prepolymer containing no carboxylic acid is synthesized, and then, the chains are extended by using diols having hydrophilic groups such as carboxylic acid, sulfonic acid, and ethylene glycol, or by using diamines. Subsequently, the resultant polymer is neutralized with the basic substance as described above to make the polymer aqueous (water-based). A chain extender agent is employed if necessary to make the obtained mixture into high-molecular weight of a mixture, and thus urethane dispersion is produced.
(Production method iii) An urethane dispersion is produced based on the production method i or the production method ii, in combination with using an emulsifier as appropriate.

Examples of the polyfunctional isocyanate compounds include: diisocyanate compounds such as 1,6-hexanediisocyanate, lysine diisocyanate, isophorone diisocyanate, cyclohexane-1,4-diisocyanate, xylylene diisocyanate, 2,4-tolylene diisocyanate, and 2,6-tolylene diisocyanate; and polyfunctional isocyanate compounds such as the adduct, the biuret, and the isocyanurate obtained from the above diisocyanate compounds, and the like. Examples of the polyols include polyester polyols, polyether polyols, and polycarbonate polyols.

The epoxy resin is a water-based resin having one or more epoxy groups in a molecule thereof. As the epoxy resin, an epoxy resin known in the technical field may be used. Examples of the epoxy resin include: a resin obtained by forcefully emulsifying a novolac-type epoxy resin obtained by adding epichlorohydrin to a phenol novolac resin using an emulsifier; and a resin obtained by forcefully emulsifying a bisphenol-type epoxy resin obtained by adding epichlorohydrin to a bisphenol using an emulsifier.

As for the modified polyolefin resin and the chlorinated modified polyolefin resin, details are described in the description for the component (a) of the dispersion resin composition of the present invention.

The ink composition, the paint composition, the adhesive composition, and the primer composition of the present invention may contain (g) a pigment as the fourth component. The pigments are a powdered solid which does not dissolve in water, oil, a solvent or the like, and has a color itself, and the pigments are a component for paint or ink to give a color.

As the pigment, three types of pigments are included: a coloring pigment, an extender pigment, and a functional pigment. Among them, the coloring pigment is a pigment for determining the color of paint or ink. The paint composition of the present invention is colored (coloring paint) when containing the coloring pigment or is colorless (clear paint) when containing no coloring pigment, and any of which is applicable.

The coloring pigment includes an organic pigment and an inorganic pigment, any of which is applicable. Examples of the organic pigment include an azo lake pigment, an insoluble azo pigment, a condensed azo pigment, a phthalocyanine pigment, an indigo pigment, a perinone pigment, a perylene pigment, a phthalone pigment, a dioxazine pigment, a quinacridone pigment, an isoindolinone pigment, a benzimidazolone pigment, a diketopyrrolopyrrole pigment, and a metal complex pigment. Examples of the inorganic pigment include yellow iron oxide, red iron oxide, carbon black, and titanium dioxide.

Examples of a brightness pigment include a flake pigment made of cholesteric liquid crystal polymers, an aluminum flake pigment, a metal oxide-coated aluminum flake pigment, a metal oxide-coated silica flake pigment, a graphite pigment, an interferential mica pigment, a colored mica pigment, a metallic titanium flake pigment, a stainless steel flake pigment, a plate-like iron oxide pigment, a metal plated glass flake pigment, a metal oxide-coated and plated glass flake pigment, and a hologram pigment.

Examples of the extender pigment include barium sulfate, talc, kaolin, and silicates.

Although the method of adding (mixing) the pigment to the paint composition, the ink composition, the adhesive composition, and the primer composition is not particularly limited, pigment is generally in a state dispersed in the composition as pigment paste. The pigment paste may be prepared by adding and dispersing pigment and resins into a solvent. Commercially available pigment paste may also be used. The resins are not particularly limited but include water-soluble resins such as acrylic polyols, polyester polyols, and polyacrylic acids. The solvent is not particularly limited but includes an organic solvent such as toluene and xylene and water. Equipment such as a sand grinder mill is typically used for the dispersion.

The ink composition, the paint composition, the adhesive composition, and the primer composition of the present invention may contain a composition further, other than the dispersion resin composition, an alcohol and/or an ether, the component (f) and the component (g), as appropriate, within the extent that the effects of the present invention are not impaired. Such a composition is not particularly limited but includes a resin except the component (f), a leveling agent, an antisettling agent, a matting agent, an ultraviolet absorber, a photostabilizer, an antioxidant, a wax, a film forming aid, a cross-linking agent, a thickener, an antifoaming agent, and a dye.

[Examples]

The present invention is described in more detail below with reference to Examples and Comparative Example but is not limited thereto.

(Average particle diameter measurement): average particle diameters were measured by a dynamic light scattering method by employing a "Zetasizer" manufactured by Malvern Instruments Ltd.

(Viscosity measurement of dispersion resin composition): viscosity is defined as a value (unit of mPa·s) obtained by measuring the viscosity of the dispersion resin composition at 25°C using a B type rotational viscometer.

[Production Example 1] (Production of chlorinated modified polyolefin resin)

A propylene-based random copolymer produced by using a metallocene catalyst as a polymerization catalyst (propylene content: 96% by weight, ethylene content: 4% by weight, MRF (melt flow rate) =2.0 g/min, melting point (Tm) =125°C) was supplied to a biaxial extruder whose barrel temperature was set at 350°C to perform thermal degradation, thereby obtained a propylene-based random copolymer having a melt viscosity of about 5000 mPa·s at 190°C. Materials of: 100 parts by weight of the degraded propylene-based random copolymer; 4 parts by weight of maleic anhydride; and 3 parts by weight of dicumyl peroxide were previously mixed sufficiently, and then, the resultant mixture was supplied to a biaxial extruder (L/D=34, $\phi$=40 millimeters, the first barrel to the eighth barrel). Subsequently, the mixture was reacted under the condition of a retention time of 5 minutes, a rotation frequency of 300 rpm, and a barrel temperature of 120°C (the first and the second barrels), 180°C (the third and the fourth barrels), 100°C (the fifth barrel), and 130°C (the sixth to the eighth barrels). Then, unreacted maleic anhydride was removed by decompression treatment in the sixth to eighth barrels, thereby obtained a maleic anhydride-modified propylene-based copolymer. Two kilograms of this resin was charged into a 50-liter glass-lined reactor, and 20 liters of chloroform were added thereto. The resultant mixture was chlorinated by blowing gaseous chlorine from the bottom of the reactor at a pressure of 2 $kg/cm^2$ while the mixture was irradiated with an ultraviolet ray. During the chlorination, sampling was performed in order to adjust the chlorine content, and obtained a sample having a chlorine content of 15.4% by weight. Subsequently, chloroform as a solvent was distilled off using an evaporator to adjust the solid content to 30% by weight. An amount of 3.0% by weight of a stabilizer (t-butylphenylglycidyl ether) based on the weight of the resin was added to this chloroform solution, and then, the resultant mixture was supplied to a biaxial extruder (L/D=34, $\phi$=40 millimeters, the first barrel to the seventh barrel). Solidification was performed under the condition of a retention time of 10 minutes, a rotation frequency of 50 rpm, and a barrel temperature of 90°C (the first to the sixth barrels), and 70°C (the seventh barrel). A decompression treatment was performed in the first, and the fourth to the sixth barrels, thereby obtained a maleic anhydride-modified chlorinated polyolefin resin (weight average molecular weight: 110,000, the graft weight of maleic anhydride: 1.9% by weight).

[Production Example 2] (Production of non-chlorinated modified polyolefin resin)

Materials of: 100 parts by weight of the propylene-based random copolymer produced by using a metallocene catalyst as a polymerization catalyst (propylene content: 88% by weight, ethylene content: 12% by weight, weight average molecular weight: 70,000, Tm=70 degrees Celsius); 4 parts by weight of maleic anhydride, 4 parts by weight of lauryl methacrylate; and 3 parts by weight of dicumyl peroxide were reacted using a biaxial extruder set at 180°C. Deaeration was also performed in the extruder to remove remaining unreacted substances, thereby obtained a non-chlorinated modified polyolefin resin (weight average molecular weight: 70,000, the graft weight of maleic anhydride: 2.0% by weight, the graft weight of lauryl methacrylate: 2.0% by weight).

[Production Example 3] (Production of chlorinated modified polyolefin resin)

A propylene-based random copolymer produced by using a metallocene catalyst as a polymerization catalyst (propylene content: 96% by weight, ethylene content: 4% by weight, MFR=2.0 g/min, melting point (Tm)=125 degrees Celsius) was supplied to a biaxial extruder whose barrel temperature was set at 350°C to perform thermal degradation, thereby obtained a propylene-based random copolymer having a melt viscosity of about 1500 mPa·s at 190°C. Materials of: 100 parts by weight of the degraded propylene-based random copolymer; 4 parts by weight of maleic anhydride; and 3 parts by weight of dicumyl peroxide were previously mixed sufficiently, and then, the resultant mixture was supplied to a biaxial extruder (L/D=34, $\phi$=40 millimeters, the first barrel to the eighth barrel). Subsequently, the mixture was reacted under the condition of a retention time of 5 minutes, a rotation frequency of 300 rpm, and a barrel temperature of 120°C (the first and the second barrels), 180°C (the third and the fourth barrels), 100°C (the fifth barrel), and 130°C (the sixth to the eighth barrels). Then, unreacted maleic anhydride was removed by decompression treatment in the sixth to eighth barrels, thereby obtained a maleic anhydride-modified propylene-based copolymer. An amount of 2 kilograms of this resin was charged into a 50-liter glass-lined reactor, and 20 liters of chloroform were added thereto. The resultant mixture was chlorinated by blowing gaseous chlorine from the bottom of the reactor at a pressure of 2 kg/cm$^2$ while the mixture was irradiated with an ultraviolet ray. During the chlorination, sampling was performed in order to adjust the chlorine content, and obtained a sample having a chlorine content of 15.4% by weight. Subsequently, chloroform as a solvent was distilled off using an evaporator to adjust the solid content to 30% by weight. An amount of 3.0% by weight of a stabilizer (t-butylphenylglycidyl ether) based on the weight of the resin was added to this chloroform solution, and then, the resultant mixture was supplied to a biaxial extruder (L/D=34, $\phi$=40 millimeters, the first barrel to the seventh barrel). Solidification was performed under the condition of a retention time of 10 minutes, a rotation frequency of 50 rpm, and a barrel temperature of 90°C (the first to the sixth barrels) and 70°C (the seventh barrel). A decompression treatment was performed in the first, and the fourth to the sixth barrels, thereby obtained a maleic anhydride-modified chlorinated polyolefin resin (weight average molecular weight: 70,000, the graft weight of maleic anhydride: 1.9% by weight).

[Example 1]

To a 2-liter four-necked flask equipped with a stirrer, a cooling tube, a thermometer and a dropping funnel, 100 parts of the maleic anhydride-modified chlorinated polyolefin resin obtained in Production Example 1, 30 parts of a polyoxyethylene alkylamine (HLB=14.2) of Formula (IV-1) below, 5.7 parts of a stabilizer (t-butylphenylglycidyl ether), and 26 parts of toluene were added, and the resultant mixture was kneaded at 120°C for 30 minutes. Subsequently, 5.7 parts of 2-amino-2-methyl-l-propanol was added thereto over 5 minutes, and then the resultant mixture was kept for 5 minutes. After that, 693 parts of hot water of 90°C was added to the mixture over 40 minutes. A decompression treatment was performed to remove toluene, and then the mixture was cooled to room temperature while being stirred, thereby obtained a dispersion resin composition containing a chlorinated modified polyolefin resin.

[Chem. 7]

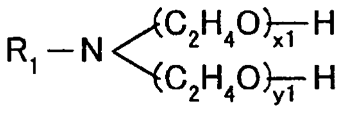

···(IV-1)

(In Formula (IV-1), $R_1$ represents an alkyl group having 14 to 20 carbon atoms, and x1+yl represents 15.)

[Example 2]

To a 2-liter four-necked flask equipped with a stirrer, a cooling tube, a thermometer and a dropping funnel, 100 parts of the maleic anhydride-modified chlorinated polyolefin resin obtained in Production Example 1, 20 parts of a polyoxyethylene alkylamine of Formula (IV-1) same as that of Example 1, 5.7 parts of a stabilizer (t-butylphenylglycidyl ether), and 26 parts of toluene were added, and the resultant mixture was kneaded at 120°C for 30 minutes. Subsequently, 5.7 parts of 2-amino-2-methyl-1-propanol was added thereto over 5 minutes, and then the resultant mixture was kept for 5 minutes. After that, 693 parts of hot water of 90°C was added to the mixture over 40 minutes. A decompression treatment was performed to remove toluene, and then the mixture was cooled to room temperature while being stirred, thereby obtained a dispersion resin composition containing a chlorinated modified polyolefin resin.

[Example 3]

To a 2-liter four-necked flask equipped with a stirrer, a cooling tube, a thermometer and a dropping funnel, 100 parts of the maleic anhydride-modified chlorinated polyolefin resin obtained in Production Example 1, 15 parts of a polyoxyethylene alkylamine of Formula (IV-1) same as that of Example 1, 5.7 parts of a stabilizer (t-butylphenylglycidyl ether), and 26 parts of toluene were added, and the resultant mixture was kneaded at 120°C for 30 minutes. Subsequently, 8 grams (5.7 parts) of 2-amino-2-methyl-1-propanol was added thereto over 5 minutes, and then the resultant mixture was kept for 5 minutes. After that, 693 parts of hot water of 90°C was added to the mixture over 40 minutes. A decompression treatment was performed to remove toluene, and then the mixture was cooled to room temperature while being stirred, thereby obtained a dispersion resin composition containing a chlorinated modified polyolefin resin.

[Example 4]

To a 2-liter four-necked flask equipped with a stirrer, a cooling tube, a thermometer and a dropping funnel, 100 parts of the maleic anhydride-modified chlorinated polyolefin resin obtained in Production Example 1, 20 parts of a polyoxyethylene alkylamine (HLB=15.4) of Formula (IV-2), 5.7 parts of a stabilizer (t-butylphenylglycidyl ether), and 26 parts of toluene were added, and the resultant mixture was kneaded at 120°C for 30 minutes. Subsequently, 8 grams (5.7 parts) of 2-amino-2-methyl-1-propanol was added thereto over 5 minutes, and then the resultant mixture was kept for 5 minutes. After that, 693 parts of hot water of 90°C was added to the mixture over 40 minutes. A decompression treatment was performed to remove toluene, and then the mixture was cooled to room temperature while being stirred, thereby obtained a dispersion resin composition containing a chlorinated modified polyolefin resin.

[Chem. 8]

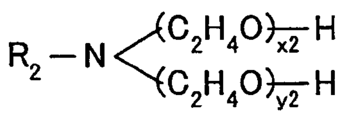

···(IV-2)

(In Formula (IV-2), $R_2$ represents an alkyl group having 8 to 18 carbon atoms, and x2+y2 represents 15.)

[Example 5]

To a 2-liter four-necked flask equipped with a stirrer, a cooling tube, a thermometer and a dropping funnel, 100 parts of the non-chlorinated modified polyolefin resin obtained in Production Example 2, 20 parts of a polyoxyethylene alkylamine (HLB=10.5) of Formula (IV-3), and 26 parts of toluene were added, and the resultant mixture was kneaded at 120°C for 30 minutes. Subsequently, 8.6 parts of dimethylethanolamine was added thereto over 5 minutes, and then the resultant mixture was kept for 5 minutes. After that, 693 parts of hot water of 90°C was added to the mixture over 40 minutes. A decompression treatment was performed to remove toluene, and then the mixture was cooled to room temperature while being stirred, thereby obtained a dispersion resin composition containing a non-chlorinated modified polyolefin resin.

[Chem. 9]

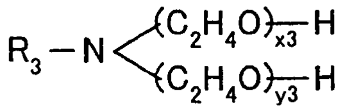

...(IV-3)

(In Formula (IV-3), $R_3$ represents an alkyl group having 8 to 18 carbon atoms, and x3+y3 represents 5.)

[Example 6]

To a 2-liter four-necked flask equipped with a stirrer, a cooling tube, a thermometer and a dropping funnel, 100 parts of the maleic anhydride-modified chlorinated polyolefin resin obtained in Production Example 1, 20 parts of a polyoxyethylene alkylamine (HLB=7) of Formula (V) below, 5.7 parts of a stabilizer (t-butylphenylglycidyl ether), and 26 parts of toluene were added, and the resultant mixture was kneaded at 120°C for 30 minutes. Subsequently, 5.7 parts of 2-amino-2-methyl-1-propanol was added thereto over 5 minutes, and then the resultant mixture was kept for 5 minutes. After that, 693 parts of hot water of 90°C was added to the mixture over 40 minutes. A decompression treatment was performed to remove toluene, and then the mixture was cooled to room temperature while being stirred, thereby obtained a dispersion resin composition containing a chlorinated modified polyolefin resin.

[Chem. 10]

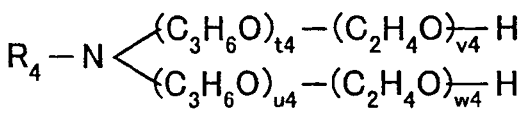

...(V)

(In Formula (V), $R_4$ represents an alkyl group having 10 to 18 carbon atoms, and t4+u4+v4+w4 represents 16.)

[Example 7]

To a 2-liter autoclave equipped with a stirrer and a thermometer, 100 parts of the maleic anhydride-modified chlorinated polyolefin resin obtained in Production Example 3, 30 parts of a polyoxyethylene alkylamine (HLB=14.2) of Formula (IV-1) same as that of Example 1, 5.7 parts of a stabilizer (t-butylphenylglycidyl ether), 5.7 parts of 2-amino-2-methyl-1-propanol, and 693 parts of water were added. The resultant mixture was stirred under the condition of 120°C and 0.2 MPa for 1 hour, and then, the mixture was cooled to room temperature while being stirred, thereby obtained a dispersion resin composition containing a chlorinated modified polyolefin resin.

[Comparative Example 1]

A dispersion resin composition containing a chlorinated polyolefin was obtained in a similar manner to that of Example 3 except that the nitrogen-containing polyoxyethylene derivative of Example 1 was replaced with an alkyl ether based emulsifier (HLB: 14.5) of Formula (B) below.

$$R_5\text{-O-}(CH_2\text{-}CH_2O)_nH \qquad (B)$$

(In Formula (B), $R_5$ represents an alkyl group having 13 carbon atoms, and n represents 12.)

[Table 1]

TABLE 1 PROPERTIES VALUES

| | (a) POLYOLEFIN-BASED RESIN | | (b) NITROGEN-COTAINING POLYOXYALKYLENE DERIVATIVE OR EMULSIFIER | | | | | PROPERTIES OF THE DISPERSION RESIN COMPOSITION | | |
|---|---|---|---|---|---|---|---|---|---|---|
| | WEGHT AVERAGE MOLECULAR WEIGHT (MW) | CHLORINE CONTENT (%) | TYPE | AMOUNT (PART / 100 PARTS OF RESIN) | ALKYL GROUP | HLB | MOLE NUMBER OF ADDED PO·EP | AVERAGE PARTICLE SIZE (nm) | VISCOSITY (mPa·s / 25°C) | pH |
| EXAMPLE 1 | 110,000 | 15.4 | NITROGEN-COTAINING POLYOXYALKYLENE DERIVATIVE | 30 | 14-20 | 14.2 | 15 | 80 | 8 | 8.3 |
| EXAMPLE 2 | 110,000 | 15.4 | | 20 | 14-20 | 14.2 | 15 | 120 | 10 | 8.2 |
| EXAMPLE 3 | 110,000 | 15.4 | | 15 | 14-20 | 14.2 | 15 | 200 | 15 | 8.0 |
| EXAMPLE 4 | 110,000 | 15.4 | | 20 | 8-18 | 15.4 | 15 | 250 | 30 | 8.2 |
| EXAMPLE 5 | 70,000 | 0 | | 20 | 8-18 | 10.5 | 5 | 90 | 13 | 8.3 |
| EXAMPLE 6 | 110,000 | 15.4 | | 20 | 10-18 | 7 | 16 | 130 | 50 | 8.2 |
| EXAMPLE 7 | 70,000 | 15.4 | | 30 | 14-20 | 14.2 | 15 | 120 | 10 | 8.2 |
| COMPARATIVE EXAMPLE 1 | 110,000 | 15.4 | ALKYL ETHERBASED EMULSIFIER | 20 | 13 | 14.5 | 12 | 91 | 10 | 8.5 |

(Evaluation of water dispersibility and dispersion stability)

The water dispersibility and the dispersion stability of the dispersion resin compositions obtained in Examples and Comparative Example under the presence of alcohol were evaluated by the following methods.

An amount of 50g of a precisely weighed dispersion resin composition was charged into a 200 cc mayonnaise bottle, and 50g of a prepared mixed solution of alcohol/water (isopropanol/water=5/5 (weight ratio), isopropanol/water=7.5/2.5 (weight ratio)) was added thereto, and the resultant mixture was stirred. The states of the dispersed materials immediately after the stirring and one day after the stirring were evaluated. The evaluation criteria were denoted by, ○: no change, Δ: fluidity is reduced, and ×: gelled.
The average particle diameters of the emulsions were also measured at the same time.

[Table 2]

TABLE 2 EVALUATION TEST FOR ALCOHOL RESISTANCE

| ALCOHOL / WATER MIXTURE | IPA / WATER=5 / 5 | | IPA / WATER=7.5 / 2.5 | |
|---|---|---|---|---|
| | JUST AFTER | AFTER ONE DAY | JUST AFTER | AFTER ONE DAY |
| EXAMPLE 1 | ○(80) | ○(82) | ○(80) | ○(90) |
| EXAMPLE 2 | ○(120) | ○(120) | ○(120) | ○(125) |
| EXAMPLE 3 | ○(205) | ○(210) | ○(205) | ○(220) |
| EXAMPLE 4 | ○(255) | ○(260) | ○(255) | ○(267) |

(continued)

| ALCOHOL / WATER MIXTURE | IPA / WATER=5 / 5 | | IPA / WATER=7.5 / 2.5 | |
|---|---|---|---|---|
| | JUST AFTER | AFTER ONE DAY | JUST AFTER | AFTER ONE DAY |
| EXAMPLE 5 | ○(90) | ○(90) | ○(90) | ○(95) |
| EXAMPLE 6 | ○(130) | ○(135) | ○(130) | ○(140) |
| EXAMPLE 7 | ○(120) | ○(120) | ○(120) | ○(130) |
| COMPERATIVE EXAMPLE 1 | Δ(100) | × (300) | × (500) | × (UNMEASURABLE) |
| ATTN.1: IPA DENOTES ISOPROPANOL<br>ATTN.2: THE VALE INSIDE "( )" DENOTES AVERAGE PARTICLE SIZE | | | | |

As is evident from the result of Table 2, when an alkyl ether based emulsifier was used instead of a nitrogen-containing polyoxyalkylene derivative as with Comparative Example 1, the emulsion was gelled by adding alcohol. Moreover, the gelation of the emulsion tended to become fast in correspondence with the increase in the amount of alcohol to be added in Comparative Example 1 in which an alkyl ether based emulsifier was used.
In contrast, the gelation of the emulsions due to alcohol addition did not occur in the dispersion resin compositions in which nitrogen-containing polyoxyalkylene derivatives were used as with Example 1 to Example 7. These results revealed that the dispersion resin compositions of Examples 1 to 7 exhibited excellent water dispersibility as compared with that of Comparative Example 1 and caused no gelation and the increase in viscosity. Moreover, the average particle diameters of the emulsions one day after the stirring were also not changed in Examples. These results revealed that the emulsions of Examples were able to maintain excellent dispersion stability even with the passage of time.
The gelation of the emulsion caused by alcohol addition is assumed due to the collapse of micelles in the emulsion. It is assumed that a composition blended with a nitrogen-containing polyoxyalkylene derivative as with the dispersion resin composition of the present invention can inhibit the collapse of micelles even when alcohol is added.

(Adhesion test)

Each of the dispersion resin compositions was adjusted to have a solid content concentration of 30% by weight, was applied to a polypropylene substrate, and was dried at 80°C for 5 minutes. Subsequently, two-liquid urethane paint was applied on the resultant substrate and was dried at 80°C for 30 minutes or at 120°C for 30 minutes to produce a test piece. After that, the evaluation of adhesion was performed.
The coating surface was divided into a hundred squares at intervals of 1 mm to form a grid that reaches the basis material. A cellophane adhesive tape was brought into intimate contact with the top of the divided coating surface and was peeled off in a 180-degree direction, which was performed 10 times to evaluate adhesion by judging from the number of squares (/100) remaining on the coating.
[Table 3]

TABLE 3 ADHESIVE PROPERTY TEST

| | ADHESIVE PROPERTY (/100) | |
|---|---|---|
| PRINTING TEMPERATURE | 80°C | 120°C |
| EXAMPLE 1 | 97 | 98 |
| EXAMPLE 2 | 100 | 100 |
| EXAMPLE 3 | 100 | 100 |
| EXAMPLE 4 | 98 | 100 |
| EXAMPLE 5 | 100 | 100 |
| EXAMPLE 6 | 100 | 100 |
| EXAMPLE 7 | 95 | 95 |
| COMPERATIVE EXAMPLE 1 | 95 | 95 |

The following descriptions are revealed from the result of Table 3.

Any of the dispersion resin compositions of Example 1 to Example 7 expressed excellent adhesion under the baking condition of any of 80°C and 120°C and showed the same adhesion as that of the composition of Comparative Example 1. Particularly, the adhesion of the dispersion resin compositions of Example 2, Example 3, Example 5, and Example 6 was extremely excellent.

Although the result of the adhesion in Example 1, Example 4, and Example 7 was slightly inferior, any of this was insignificant. It is assumed that in the case of Example 1 a great deal of polyoxyethylene alkylamines was used, the ratio of the amount of the polyolefin resin as an adhesion component relatively decreased. It is assumed that in the case of Example 4 emulsifying properties were slightly inferior because the HLB of the used polyoxyethylene alkylamine was not the optimal value, and therefore, the adhesion was affected.

These results reveal that the dispersion resin composition of the present invention not only exhibits excellent water dispersibility and dispersion stability but also shows excellent adhesion to a non-polar substrate such as polyolefin regardless of the baking temperature and shows balanced physical properties.

(Gasohol resistance test)

The test piece (coated plate) produced in the adhesion test was immersed in regular gasoline/ethanol=9/1 (v/v) for 120 minutes, and the state of the coating was observed. The case where no change was observed on the surface of the coating was designated as good. The case where the surface of the coating changed but no peeling occurred was designated as moderate (almost good). The case where the surface of the coating was peeled was designated as poor. Table 4 shows the result.

(Water resistance test)

A coated plate similar to that used in the gasohol resistance test was immersed in hot water of 40 degrees Celsius for 240 hours to investigate the state and the adhesion of the coating. The case where no change was observed on the surface of the coating, and adhesion was favorable was designated as good. The case where blistering occurred on the surface of the coating, but no peeling occurred was designated as moderate. The case where blistering occurred on the surface of the coating, and the surface of the coating was peeled was designated as poor. Table 4 shows the result.

[Table 4]

TABLE 4 RESULT OF PROPERTIES TEST

| | GASOHOLE RESISTANCE TEST | WATER RESISTANCE TEST |
|---|---|---|
| EXAMPLE 1 | GOOD | ALMOST GOOD |
| EXAMPLE 2 | GOOD | GOOD |
| EXAMPLE 3 | GOOD | GOOD |
| EXAMPLE 4 | GOOD | GOOD |
| EXAMPLE 5 | GOOD | GOOD |
| EXAMPLE 6 | GOOD | GOOD |
| EXAMPLE 7 | GOOD | ALMOST GOOD |
| COMPERATIVE EXAMPLE 1 | GOOD | GOOD |

As is evident from Table 4, any of the dispersion resin compositions of Examples 1 to 7 shows a favorable result in each test. The water resistance in Example 1 and Example 7 was slightly low but was insignificant. This is assumed to be an effect of the use of a great deal of polyoxyethylene alkyleneamines.

These results reveal that the dispersion resin composition of the present invention is also excellent in the gasohol resistance and the water resistance.

As with the evaluation of water dispersibility and dispersion stability, a mixed solution of alcohol (isopropanol) /water was added to each of the dispersion resin compositions, and the resultant mixture was stirred. The obtained solution was applied on a coated plate. As a result, while favorable coatings were formed from the solutions of the dispersion resin compositions of Example 1 to Example 7, the solution of the composition of Comparative Example 1 was gelled and no coating was formed.

## Claims

1. A dispersion resin composition for use in a paint, an ink, an adhesive or a primer that each contains an alcohol and/or an ether, the dispersion resin composition comprising:

(a) a modified polyolefin resin which is obtained by modifying a polyolefin-based resin containing a polymer mainly composed of olefin monomer units by using one or more types of polarity-imparting agents selected from the group consisting of chlorine, an unsaturated carboxylic acid, a derivative of the unsaturated carboxylic acid, an anhydride of the unsaturated carboxylic acid, and a radical polymerizable monomer;
(b) a nitrogen-containing polyoxyalkylene derivative having a HLB value of 5 to 17, the HLB value representing a balance of hydrophilicity-lipophilicity and being calculated by the Griffin's formula HLB=[{(molecular weight of hydrophilic group moiety)/(total molecular weight)}×100]/5;
(c) a basic substance; and
(d) water.

2. The dispersion resin composition according to claim 1, wherein the (b) nitrogen-containing polyoxyalkylene derivative comprises one or more types of compounds selected from the group consisting of a compound of Formula (I) below, a compound of Formula (II) below, and a compound of Formula (III) below:

[Chem. 1]

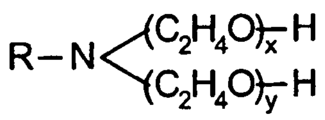

...(I )

(in Formula (I), R represents an alkyl group having 1 to 50 carbon atoms, x represents an integer of 1 to 49, y represents an integer of 1 to 49, and x+y represents an integer of 2 to 50),

[Chem. 2]

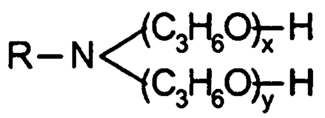

...(II )

(in Formula (II), R represents an alkyl group having 1 to 50 carbon atoms, x represents an integer of 1 to 49, y represents an integer of 1 to 49, and x+y represents an integer of 2 to 50),

[Chem. 3]

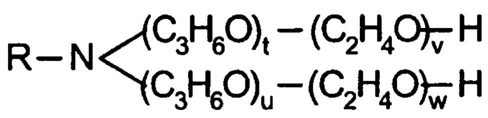

...(III )

(in Formula (III), R represents an alkyl group having 1 to 50 carbon atoms, t represents an integer of 1 to 47, u represents an integer of 1 to 47, v represents an integer of 1 to 47, w represents an integer of 1 to 47, t+v represents an integer of 2 to 48, u+w represents an integer of 2 to 48, and t+u+v+w represents an integer of 4 to 50).

3. The dispersion resin composition according to claim 1 or 2, wherein the (a) modified polyolefin resin is a modified polyolefin resin which is obtained by modifying a polyolefin-based resin containing a polymer mainly composed of olefin monomer units by using chlorine and an unsaturated carboxylic acid and/or an anhydride of the unsaturated carboxylic acid.

4. The dispersion resin composition according to any one of claims 1 to 3, further comprising (e) an alcohol and/or an ether.

**5.** A composition of a paint, an ink, an adhesive, or a primer comprising:

the dispersion resin composition according to any one of claims 1 to 4; and any an alcohol and/or an ether.

## Patentansprüche

**1.** Dispersionsharzzusammensetzung zur Verwendung in einer Farbe, einer Tinte, einem Haftmittel oder einem Primer, welche jeweils einen Alkohol und/oder einen Ether enthalten, wobei die Dispersionsharzzusammensetzung umfasst:

(a) ein modifiziertes Polyolefinharz, welches durch Modifizieren eines Polyolefin-basierten Harzes, enthaltend ein Polymer, das im Wesentlichen aus Olefinmonomereinheiten zusammengesetzt ist, durch Verwenden einer oder mehrerer Art(en) von polaritätsverleihenden Mitteln, ausgewählt aus der Gruppe, bestehend aus Chlor, einer ungesättigten Carbonsäure, einem Derivat der ungesättigten Carbonsäure, einem Anhydrid der ungesättigten Carbonsäure, und einem radikalisch polymerisierbaren Monomer, erhalten ist;
(b) ein stickstoffhaltiges Polyoxyalkylenderivat, aufweisend einen HLB-Wert von 5 bis 17, wobei der HLB-Wert eine Differenz von Hydrophilie-Lipophilie darstellt und mit der Griffin-Formel HLB=[{(Molekulargewicht des hydrophilen Gruppenrests) / (Gesamtmoiekuiargewicht)} × 100] / 5 berechnet wird;
(c) eine basische Substanz; und
(d) Wasser.

**2.** Dispersionsharzzusammensetzung nach Anspruch 1, wobei das (b) stickstoffhaltige Polyoxyalkylenderivat eine oder mehrere Art(en) von Verbindungen umfasst, ausgewählt aus der Gruppe, bestehend aus einer Verbindung der nachstehenden Formel (I), einer Verbindung der nachstehenden Formel (II) und einer Verbindung der nachstehenden Formel (III):

[Chem. 1]

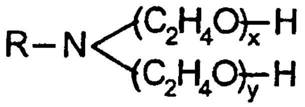
...(I )

(in Formel (I) stellt R eine Alkylgruppe, aufweisend 1 bis 50 Kohlenstoffatome, dar, x stellt eine ganze Zahl von 1 bis 49 dar, y stellt eine ganze Zahl von 1 bis 49 dar, und x+y stellt eine ganze Zahl von 2 bis 50 dar),

[Chem. 2]

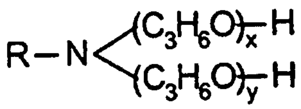
...(II )

(in Formel (II) stellt R eine Alkylgruppe, aufweisend 1 bis 50 Kohlenstoffatome, dar, x stellt eine ganze Zahl von 1 bis 49 dar, y stellt eine ganze Zahl von 1 bis 49 dar, und x+y stellt eine ganze Zahl von 2 bis 50 dar),

[Chem. 3]

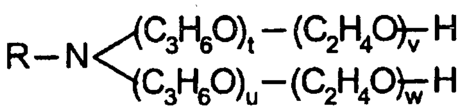
...(III)

(in Formel (III) stellt R eine Alkylgruppe, aufweisend 1 bis 50 Kohlenstoffatome, dar, t stellt eine ganze Zahl von 1 bis 47 dar, u stellt eine ganze Zahl von 1 bis 47 dar, v stellt eine ganze Zahl von 1 bis 47 dar, w stellt eine ganze Zahl von 1 bis 47 dar, t+v stellt eine ganze Zahl von 2 bis 48 dar, u+w stellt eine ganze Zahl von 2 bis 48 dar, und t+u+v+w stellt eine ganze Zahl von 4 bis 48 dar).

3. Dispersionsharzzusammensetzung nach Anspruch 1 oder 2, wobei das (a) modifizierte Polyolefinharz ein modifiziertes Polyolefinharz ist, welches durch Modifizieren eines Polyolefin-basierten Harzes, enthaltend ein Polymer, das im Wesentlichen aus Olefinmonomereinheiten zusammengesetzt ist, durch Verwenden von Chlor und einer ungesättigten Carbonsäure und/oder einem Anhydrid der ungesättigten Carbonsäure erhalten ist.

4. Dispersionsharzzusammensetzung nach einem der Ansprüche 1 bis 3, weiter umfassend (e) einen Alkohol und/oder Ether.

5. Zusammensetzung einer Farbe, einer Tinte, eines Haftmittels oder eines Primers, umfassend:

   die Dispersionsharzzusammensetzung nach einem der Ansprüche 1 bis 4; und irgendeinen Alkohol und/oder einen Ether.

## Revendications

1. Composition de résine dispersante à utiliser dans une peinture, une encre, un adhésif ou un apprêt, qui contiennent chacun, un alcool et/ou un éther, la composition de résine dispersante comprenant :

   (a) une résine de polyoléfine modifiée, qui est obtenue par modification d'une résine à base de polyoléfine, contenant un polymère composé essentiellement d'unités monomères oléfiniques, en utilisant un ou plusieurs types d'agents conférant la polarité, choisis parmi le groupe consistant en le chlore, un acide carboxylique insaturé, un dérivé de l'acide carboxylique insaturé, un anhydride de l'acide carboxylique insaturé, et un monomère polymérisable par voie radicalaire ;
   (b) un dérivé de polyoxyalkylène contenant de l'azote, ayant une valeur ELH allant de 5 à 17, la valeur ELH représentant la valeur de l'équilibre lipophilie-hydrophilie et étant calculée par la formule de Griffin

   $$\text{ELH} = [\{(\text{masse moléculaire de la partie hydrophile})/(\text{masse moléculaire total})\}\times 100]/5\ ;$$

   (c) une substance basique, et
   (d) de l'eau.

2. Composition de résine dispersante selon la revendication 1, où le dérivé de polyoxyalkylène contenant de l'azote (b) comprend un ou plusieurs types de composés choisis parmi le groupe consistant en un composé de formule (I) ci-dessous, un composé de formule (II) ci-dessous et un composé de formule (III) ci-dessous :

[Chem. 1]

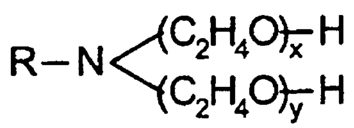 ...(I )

(dans la formule (I), R représente un groupe alkyle ayant 1 à 50 atomes de carbone, x représente un entier allant de 1 à 49, y représente un entier allant de 1 à 49, et x+y représente un entier allant de 2 à 50),

[Chem. 2]

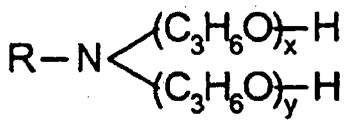 ...(II )

(dans la formule (II), R représente un groupe alkyle ayant 1 à 50 atomes de carbone, x représente un entier allant de 1 à 49, y représente un entier allant de 1 à 49, et x+y représente un entier allant de 2 à 50),

[Chem. 3]

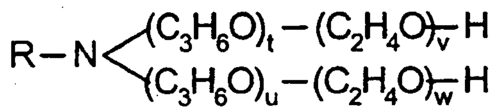

...(III)

(dans la formule (III), R représente un groupe alkyle ayant 1 à 50 atomes de carbone, t représente un entier allant de 1 à 47, u représente un entier allant de 1 à 47, v représente un entier allant de 1 à 47, w représente un entier allant de 1 à 47, t+v représente un entier allant de 2 à 48, u+w représente un entier allant de 2 à 48, et t+u+v+w représente un entier allant de 4 à 50).

**3.** Composition de résine dispersante selon la revendication 1 ou 2, où la résine de polyoléfine modifiée (a) est une résine de polyoléfine modifiée qui est obtenue par modification d'une résine à base de polyoléfine contenant un polymère composé essentiellement d'unités monomères oléfiniques en utilisant le chlore et un acide carboxylique insaturé et/ou un anhydride de l'acide carboxylique insaturé.

**4.** Composition de résine dispersante selon l'une quelconque des revendications 1 à 3, comprenant en outre, (e) un alcool et/ou un éther.

**5.** Composition d'une peinture, d'une encre, d'un adhésif ou d'un apprêt, comprenant :

la composition de résine dispersante selon l'une quelconque des revendications 1 à 4 ; et un alcool et/ou un éther.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11152409 A
- WO 2006106813 A
- WO 2007119760 A1
- JP 6256592 A